# EUROPEAN PATENT SPECIFICATION

(11) **EP 1 632 419 B1**
(45) Date of publication and mention of the grant of the patent: **05.11.2008**
(21) Application number: 05018604.8
(22) Date of filing: 26.08.2005
(51) Int. Cl.: B62D 1/20, F16D 1/08, B62D 1/16

(54) **Joint section between shaft and universal joint yoke**
Verbindungsbereich zwischen einer Welle und einer Kreuzkupplungsgabel
Liaison entre un arbre et une fourchette d'un joint universel

(30) Priority: 01.09.2004 JP 2004254585
(43) Date of publication of application: 08.03.2006
(73) Proprietor: NSK LTD., Shinagawa-ku, Tokyo 141-8560 (JP)
(72) Inventor: Sekine, Hiroshi, NSK Steering Systems Co., Ltd, Maebashi-shi Gunma 371-8528 (JP)
(74) Representative: Klingseisen, Franz

(56) References cited:
- EP-A- 0 323 298
- EP-A- 0 445 591
- DE-A1- 19 829 304
- GB-A- 2 395 248
- US-A- 5 253 949
- US-A1- 2001 012 470
- PATENT ABSTRACTS OF JAPAN vol. 1998, no. 03, 27 February 1998 (1998-02-27) -& JP 09 291910 A (NIPPON SEIKO KK), 11 November 1997 (1997-11-11)

## Description

### BACKGROUND OF THE INVENTION

### Field of the Invention:

A joint section between a shaft and a universal joint yoke according to the present invention is used for example in a steering apparatus, for connecting the ends of a variety of shafts constituting the steering apparatus to a universal joint yoke.

### Description of the Related Art:

A joint section with the technical features of the preamble of claim 1 and 2 is disclosed in document JP 09291910.

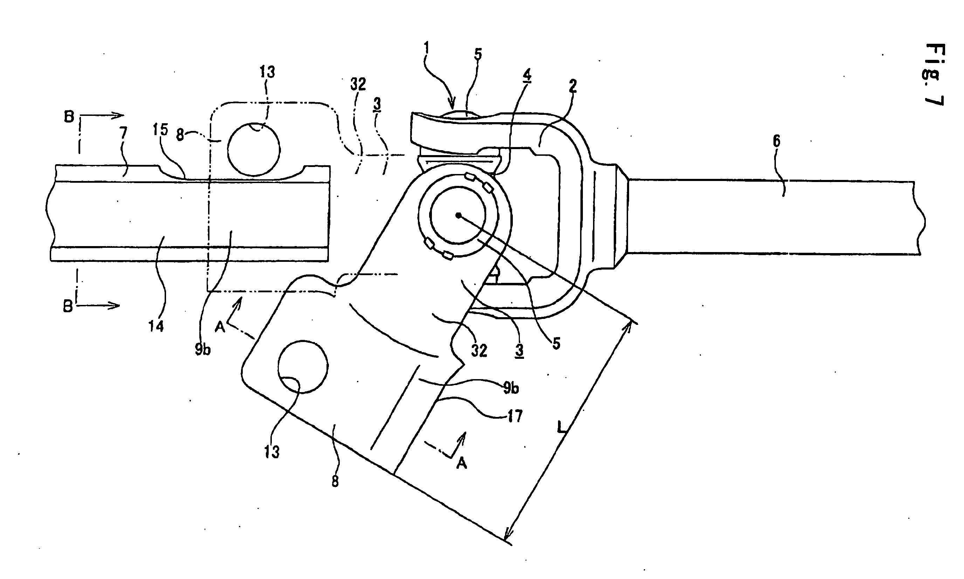

In order to apply a steering angle to the front wheels of a motor vehicle, a steering apparatus transmits movement of a steering shaft rotating in association with operation of a steering wheel, to a steering gear input shaft via a cross-shaft type universal joint 1 as shown in FIG. 7. This universal joint 1 joins a pair of yokes 2 and 3 via a cross shaft 4. The end portions provided at four positions on the cross shaft 4 are each supported on the tips of the yokes 2 and 3 in a freely oscillating manner via rollers provided within bearing cups 5. Therefore, even if the centers of the two yokes 2 and 3 are not positioned on the same straight line, a rotational force can be transmitted between both yokes 2 and 3.

When assembling a steering apparatus employing such a universal joint 1, for example, one yoke 2 (on the right in FIG. 7) is previously joined to the end of one shaft 6 of a steering shaft or the like by welding or by a screw clamping or the like, and the other yoke 3 (on the left in FIG. 7) is joined to the end of the other shaft 7. Such assembly work normally requires that the one shaft 6 be supported on the chassis of the vehicle, and this shaft 6 and the other shaft 7 are then joined with the universal joint 1.

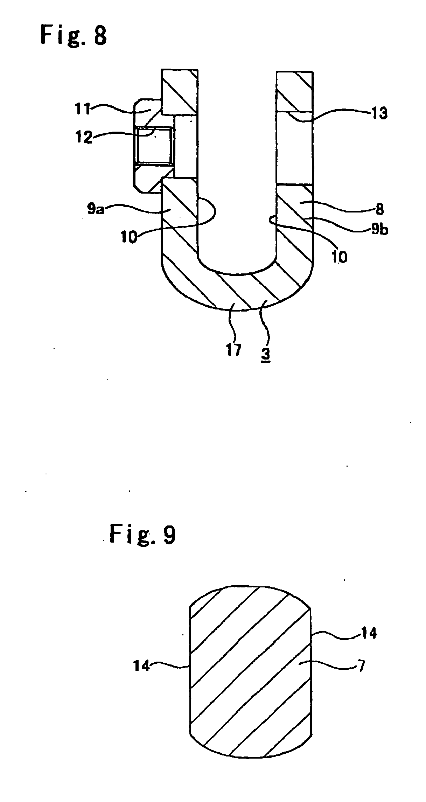

Therefore, of the yokes 2 and 3 of the universal joint 1 constituting the steering apparatus, it is desirable that at least the other yoke 3 is of a so-called "side-insertion-type (slap type)" which can be connected without moving the shaft 6 in the axial direction, as described for example in Patent Document 1(US Patent No.5358350). For example, with the universal joint 1 shown in FIG. 7, one yoke 2 is welded onto the end of the shaft 6, however, the other yoke 3 is of the side-insertion-type having a base end portion 8 of U-shape cross-section as shown in FIG. 8.

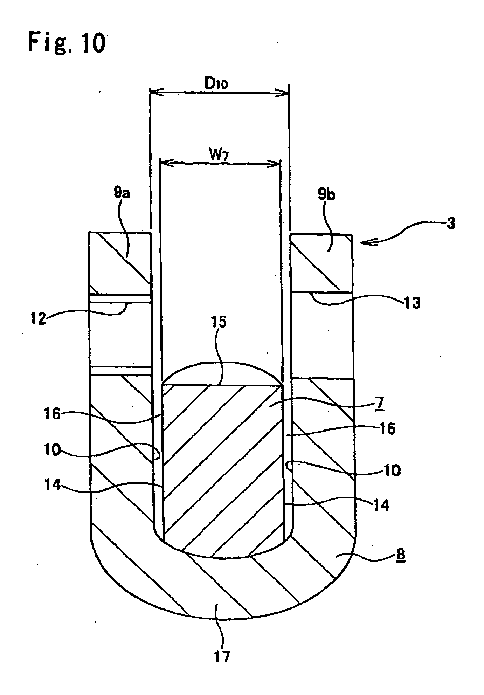

The base end portion 8 of this side-insertion-type yoke 3 comprises a pair of clamping plates 9a and 9b. Mutually parallel clamping surfaces 10 are disposed on the inside surfaces of these mutually separated clamping plates 9a and 9b. A nut 11 is inserted and fixed into the opening side end portion of one clamping plate 9a (on the left in FIG. 8) to thereby provide a threaded hole 12. Furthermore, a through-hole 13 having a diameter greater than the threaded hole 12, is formed concentric with the threaded hole 12 in the opening side end portion of the other clamping plate 9b. As shown in FIG. 10 described below, the threaded hole 12 may be formed directly in the clamping plate 9a. Moreover, a construction in which the nut 11 is not inserted and fixed into the yoke 3 is also possible.

On the other hand, at least the tip end portion of the shaft 7 joined to the yoke 3 constructed as described above is of oval cross-section as shown in FIG. 9. In other words, the outer peripheral surface of the tip end portion of this shaft 7 is formed as a pair of parallel outside flat surfaces 14, and when connected, these outside flat surfaces 14 and the clamping surfaces 10 are in close contact, and thus rotation of the shaft 7 in relation to the yoke 3 is prevented.

When the end portion of the shaft 7 having the aforementioned shape is connected and fixed to the base end portion 8 of the yoke 3, at first, as shown by the solid line in FIG. 7, the end portion of the shaft 7 is disposed in the opening side of the base end portion 8. From this condition, for example, by rotating the yoke 3 around the cross shaft 4, the yoke 3 is swung in the clockwise direction in FIG. 7 from the position indicated by the solid line, to the position indicated by the chain double-dashed line, and the end portion of the shaft 7 is inserted into the base end portion 8 of the yoke 3. The end portion of the shaft 7 may also be inserted into the base end portion 8 of the yoke 3 by moving the end portion of the shaft 7 without moving the yoke 3. In any case, the clamping bolt (not shown in the figure) is not inserted into the through-hole 13 prior to inserting the end portion of the shaft 7 into the base end portion 8.

As described above, if the end portion of the shaft 7 is inserted in the base end portion 8 of the yoke 3, and the clamping surfaces 10 and the outside flat surfaces 14 (FIG. 8 and FIG. 9) are opposed, screwing the male threaded portion formed on the tip end portion of the clamping bolt inserted through the through-hole 13 is screwed into the threaded hole 12 and further tightened. By this tightening, the space between the pair of clamping surfaces 10 is reduced, the clamping surfaces 10 and the outside flat surfaces 14 come into strong contact, and the end portion of the shaft 7 is joined and fixed to the base end portion 8. A cutout 15 is formed in one edge portion of the shaft 7 to prevent interference between the shaft 7 and the shaft portion of the clamping bolt, and to prevent the withdrawal of the yoke 3 in the axial direction of the shaft 7 if the clamping bolt becomes loose. Furthermore, additional to the aforementioned structure, structures described in, for example, Patent Documents 2 through 4 (JP Patent No. 2735260, US Patent No. 5090833, and EP Patent Application Publication No. 309344) may also be employed as a means to tighten the clamping plates 9a and 9b together.

Moreover, clearances 16 can be provided between the clamping surfaces 10 and the outside flat surfaces 14 as shown in FIG. 10, to facilitate insertion of the end portion of the shaft 7 between the pair of clamping plates 9a and 9b in confined spaces such as the engine compartment. In other words, prior to tightening the clamping bolt, the space D₁₀ between the clamping surfaces 10 of the pair of clamping plates 9a and 9b is greater than the shaft 7 width W₇(D₁₀ > W₇) being the space between the outside flat surfaces 14 of the shaft 7. The clearances 16 then exist between each of clamping surfaces 10 and the opposite outside flat surface 14. Furthermore, with this structure, the clamping surfaces 10 of the pair of clamping plates 9a and 9b, and each outside flat surface 14 opposite each clamping surface 10, are mutually parallel. Thus, the angle formed between each clamping surface 10 and the outside flat surface 14 is 0°

In such a structure, when the clamping bolt is tightened in the threaded hole 12, and the clamping surfaces 10 are brought into contact with the outside flat surfaces 14, the clamping surfaces 10 and the outside flat surfaces 14 are in contact at the opening side of the base end portion 8 (top of FIG. 8 and FIG. 10) where there are the threaded hole 12 and the through-hole 13. On the other hand, part of the clamping surfaces 10 and the outside flat surfaces 14 on the side of the connecting portion 17 (bottom of FIG. 8 and FIG. 10) connecting the pair of clamping plates 9a and 9b, at the part on the opposite side to the opening side of the base end portion 8, do not contact. Thus, with the clamping bolt tight, clearances exist at the part on the connecting portion 17 side, between the clamping surfaces 10 and the outside flat surfaces 14.

That is to say, when the clamping bolt is tightened in the threaded hole 12, the clamping plates 9a and 9b approach each other from the opening side of the base end portion 8. Thus the clamping surfaces 10 and the outside flat surfaces 14 first come into contact at this opening side portion. This opening side portion comes into contact, however, since each clamping surface 10 and outside flat surface 14 do not approach each other any further at the connecting portion 17 side, a clearance develops at this part. With the clamping bolt tightened in this manner, clearances exist between clamping surfaces 10 and outside flat surfaces 14 on the connecting portion 17 side, and application of a large twisting torque to the shaft 7 may result in movement of the shaft 7 within the clearances, and play may develop. Such play in the shaft 7 presents the driver with an unnatural feeling when using the steering wheel, and is therefore not desirable.

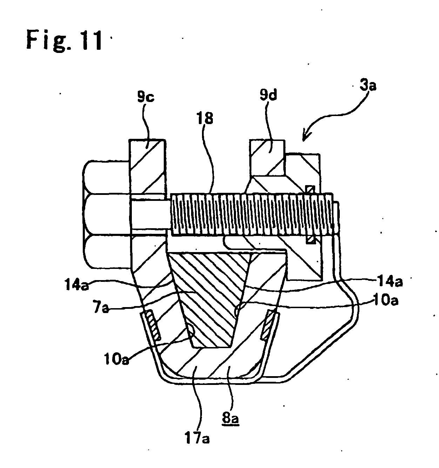

Moreover, with the structure described in Patent Document 2, as shown in FIG. 11, a pair of clamping plates 9c and 9d are inclined so that they become closer towards the connecting portion 17a, so that the cross-sectional shape of a base end portion 8a of a yoke 3a is approximately trapezoidal in shape. Furthermore, the tip end portion of a shaft 7a is of the same cross-sectional shape. With this structure as well, if clearances exist between clamping surfaces 10a of the clamping plates 9c and 9d, and outside flat surfaces 14a formed on the tip end portion of the shaft 7a prior to tightening a clamping bolt 18, the same problems occur as with the structure shown in FIGS. 7 through 11.

On the other hand, in Patent Document 5 (JP Patent Application Publication No. H09-291910), a structure is described in which the angle formed between the clamping surfaces of the pair of clamping plates and the outside flat surfaces of the shaft is between 1° and 2° prior to tightening the clamping bolt. That is to say, by inclining both clamping surfaces so that the space between the clamping surfaces increases towards the opening side of the base end portion where there is the through-hole and the threaded hole through which the clamping bolt is inserted and screwed into respectively, the angle formed by each clamping surface and the outside flat surfaces is between 1° and 2°. With this configuration, each clamping surface and outside flat surface is readily brought into contact at the opening side of the base end portion and at the connecting portion, with the clamping bolt tightened. That is to say, the space between the clamping surfaces is gradually reduced as the bolt is tightened, and the clamping surfaces become parallel with each other, with the clamping surfaces and outside flat surfaces being in contact. Thus, each clamping surface and outside flat surface, not only at the opening side portion, but also at the connecting portion being the part on the opposite side to the opening side portion, are readily brought into contact.

However, even with the structure described in Patent Document 5, when the clearance between each clamping surface and each outside flat surface is large prior to tightening the clamping bolt, the same problems may occur as with the structure shown in FIGS. 7 through 10. That is to say, when the clearance between the surfaces is large, even if the angle formed by the surfaces is regulated to between 1° and 2°, a clearance may develop between the connecting portion side of the surfaces in part, after the clamping bolt is tightened. In such cases, therefore, it is necessary to increase the aforementioned angle, however the relationship between the clearance and the angle is not described in practical detail in Patent Document 5. Moreover, since the rigidity of both clamping plates varies with plate thickness, it is also necessary to consider this plate thickness in order to maintain each clamping surface and each outside flat surface in constant contact at the opening side and the connecting portion side, however this is not described.
[Patent Document 1] US Patent No. 5358350
[Patent Document 2] JP Patent No. 2735260
[Patent Document 3] US Patent No. 5090833
[Patent Document 4] European Patent Application Publication No. 309344
[Patent document 5] JP Patent Application Publication No. H09-291910

### SUMMARY OF THE INVENTION

The joint section between a shaft and a universal joint yoke of the present invention takes the foregoing into consideration, and has been invented in order to realize a structure in which the occurrence of play, even when a large twisting torque is applied to the shaft, is prevented by bringing the clamping surfaces of the pair of clamping plates and the outside flat surfaces of the shaft into contact at the opening side and the connecting portion side of the base end portion, with the clamping bolt tightened, irrespective of the size of the clearances between these surfaces, and the plate thickness of both clamping plates.

In all cases, the joint section between a shaft and a universal joint yoke of the present invention comprises, as with the conventional joint section between a shaft and a universal joint yoke; a shaft, a pair of outside flat surfaces, a yoke, a pair of clamping plates, a connecting portion, a through-hole or a threaded hole, and a clamping bolt.

The shaft rotates in use.

The outside flat surfaces are formed on an outer peripheral surface of a tip end portion of the shaft.

The yoke is made of metal, and constitutes a universal joint, and has a base end portion with an approximate U-shape in cross section, that is open on one side.

The clamping plates are arranged separated from each other and constitute the base end portion, wherein the respective inside surfaces serve as clamping surfaces opposed to the outside flat surfaces;

The connecting portion is for connecting together the clamping plates at a part on the opposite side to the opening of the base end portion

The through-hole or threaded hole are formed in the clamping plates substantially concentric with each other.

Moreover, the clamping bolt has a male thread portion formed at the tip end portion which when inserted through the through-hole is screwed into the threaded hole or a nut.

Particularly in the joint section between a shaft and a universal joint yoke described according to a first aspect of the invention, in the case where it is assumed that prior to tightening the clamping bolt, a virtual centerline dividing in two in the width direction a gripping portion between the clamping plates, and a virtual centerline dividing in two in the width direction a part of the tip end portion of the shaft inserted in the gripping portion are aligned, and an outer surface of the shaft and an inner surface of the connecting portion are brought into contact, clearances exist between the outside flat surfaces and the clamping surfaces, which are narrow at the connecting portion side, and wide at the opening side of the base end portion in which the through-hole or threaded hole are formed. Moreover, when the minimum value for the width of both clearances is S (mm), the angle formed between the outside flat surfaces and the clamping surfaces at the portion at which these surfaces are non-parallel is θ (°), and the plate thickness of the both clamping plates is t (mm), θ/S ≥ - 8.5t + 67.2 is satisfied when the plate thickness t is within a range of between 5.5 mm and 7.5 mm.

Furthermore, in the joint section between a shaft and a universal joint yoke described according to a second aspect of the invention, in the case where it is assumed that prior to tightening the clamping bolt, a virtual centerline dividing in two in the width direction a gripping portion between the clamping plates, and a virtual centerline dividing in two in the width direction a part of the tip end portion of the shaft inserted in the gripping portion are aligned, and an outer surface of the tip end portion of the shaft and an inner surface of the connecting portion are brought into contact, clearances exist between the outside flat surfaces and the clamping surfaces. Moreover, of the outside flat surfaces, a step is provided between first flat surfaces existing towards the connecting portion side from the shaft center, and second flat surfaces existing towards the opening side of the base end portion in which the through-hole or threaded hole is formed, than the first flat surfaces, so that the spaces between the second flat surfaces and the clamping surfaces are larger than the spaces between the first flat surfaces and the clamping surfaces. In addition, when the minimum value for the width of the clearances between the outside flat surfaces and the clamping surfaces is S (mm), the angle formed between the virtual surfaces connecting the connecting portions of the step portions and the first flat surfaces, and the edge on the opening side of the second surfaces, and the clamping surfaces, is θ (°), and the plate thickness of the both clamping plates is t (mm), θ/S ≥ - 8.5t + 67.2 is satisfied when the plate thickness t is within a range of between 5.5 mm and 7.5 mm.

### [Effects of the Invention]

According to the joint section between a shaft and a universal joint yoke of the present invention constructed as described above, the minimum value S for the width of the clearances between the outside flat surfaces and the clamping surfaces, and the angle θ (°) formed between the outside flat surfaces and the clamping surfaces at the part at which these surfaces are non-parallel (in the first aspect), or the angle θ (°) formed between the virtual surfaces connecting the connecting portions of the step portions and the first surfaces, and the edge on the opening side of the second surfaces, and the clamping surfaces (in the second aspect), are regulated by the relationship with the thickness t of the pair of clamping plates. Therefore the outside flat surfaces and the clamping surfaces can be brought into contact at the opening side of the base end portion and at the connecting portion side irrespective of the clearances and thickness of the clamping plates. That is to say, the present inventor found the relationship between the minimum value S for the clearance and the angle θ, in the case where the thickness t of both clamping plates is set to a fixed value, to make outside flat surfaces and the clamping surfaces bring into contact at the opening side of the base end portion and at the connecting portion side, by experiment and by analysis using the finite element method. The equation θ/S ≥ - 8.5t + 67.2 was then derived from this relationship.

If the relationship between θ/S and t satisfies the aforementioned equation, the outside flat surfaces and the clamping surfaces can be brought into contact at the opening side of the base end portion and at the connecting portion side. A proviso is that the thickness t of both clamping plates is within a range of between 5.5 mm and 7.5 mm in normal use (more desirably within a range of between 6.0 mm and 7.0 mm). Furthermore, the yoke is manufactured of a ferrous metal material (steel) such as hot rolled mild steel plate. As described above, if the outside flat surfaces and the clamping surfaces can be brought into contact at the opening side of the base end portion and at the connecting portion side, the occurrence of play can be prevented even when a large twisting torque is applied to the shaft.

### BRIEF DESCRIPTION OF THE DRAWINGS

FIG. 1 is a cross-section of a joint section connecting the tip end portion of a shaft and a base end portion of a yoke, and shows a first embodiment of the present invention in a condition prior to tightening a clamping bolt.
FIG. 2 is a similar cross-section showing a condition with the clamping bolt tightened.
FIG. 3 is a graph showing the condition in which the clamping surfaces and the outside flat surfaces are in contact at the opening side and the connecting portion side of the base end portion by the relationship between plate thickness t of a clamping plate and an angle θ formed between the clamping surfaces and the outside flat surfaces, divided by a minimum value S for the width of the clearances between the clamping surfaces and the outside flat surfaces (θ/S).
FIG. 4 is similar to FIG. 1, showing a second embodiment of the present invention.
FIG. 5 is similar to FIG. 1, showing a third embodiment.
FIG. 6 is similar to FIG. 1, showing a fourth embodiment.
FIG. 7 is a side view showing a structure in which the tip end portion of a shaft and the base end portion of a yoke are coupled a subject matter of the present invention.
FIG. 8 is a cross-section along A-A in FIG. 7.
FIG. 9 is a cross-section along B-B in FIG. 7.
FIG. 10 is a cross-section showing the dimensional relationship between the base end portion of the yoke and the tip end portion of the shaft.
FIG. 11 shows an another example of a conventional structure, being a cross-section showing a condition in which the tip end portion of a shaft and the base end portion of a yoke are coupled.

### DESCRIPTION OF THE PREFERRED EMBODIMENT OF THE INVENTION

In order to execute the present invention, it is desirable that θ/S > 16.2 when the thickness t of both clamping plates is 6 mm.

Moreover, θ/S > 12 when the thickness t of both clamping plates is 6.5 mm.

Furthermore, θ/S > 7.7 when the thickness t of both clamping plates is 7 mm.

When constructed as described above, of the contacting portions of the outside flat surfaces and the clamping surfaces, the contact surface pressure at the connecting portion side of the base end portion can be made large, and the occurrence of play in the joint section between the shaft and the yoke can be suppressed to a greater extent. Of course, the relationship between each plate thickness t and each θ/S satisfies the aforementioned equation θ/S ≥ - 8.5t + 67.2.

### [First Embodiment]

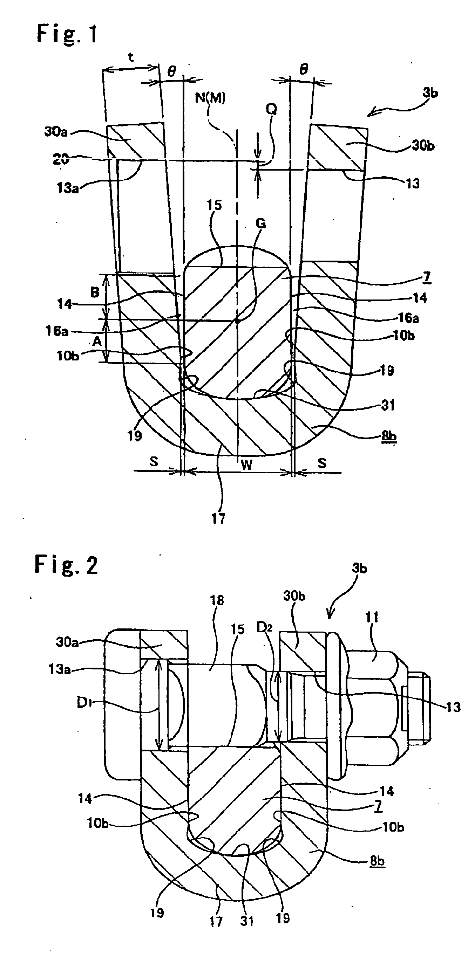

FIGS. 1 through 3 show a first embodiment of the present invention. The feature of the present invention is that, by contriving a structure for the joint section between the shaft 7 and the yoke 3b, the occurrence of play in this joint section is prevented (the rigidity is ensured), even when a large twisting torque is applied between the shaft 7 and the yoke 3b. More specifically, the dimensions of the clearances 16a between the pair of outside flat surfaces 14 formed on the tip end outer surface of the shaft 7, and the pair of clamping surfaces 10b being the inside surfaces of a pair of clamping plates 30a and 30b constituting the base end portion 8 of the yoke 3b, are regulated. Since the construction and operation of other parts are the same as for the conventional structure shown in FIGS. 7 through 10, figures and descriptions related to equivalent parts are omitted or simplified, and the description is concentrated on parts characteristic of the present embodiment.

In the present embodiment, a part between the two clamping plates 30a and 30b that grips the tip end portion of the shaft 7 is a gripping portion 31. Furthermore, a virtual centerline N dividing the gripping portion 31 in two in the width direction (left-right direction in FIG. 1 and FIG. 2), and a virtual centerline M dividing the part at the tip end portion of the shaft 7, that is inserted into the gripping portion 31 in two in the width direction, are prescribed. When prior to tightening the clamping bolt 18, these centerlines N and M are aligned as shown in FIG. 1, and the outer surface of the shaft 7 and the inner surface of the gripping portion 31 are brought into contact, clearances 16a exist between the outside flat surfaces 14 and the clamping surfaces 10b. These clearances 16a are wedge-shaped with the widths (space between surfaces 14 and 10b) narrow at the connecting portion 17 side (bottom of FIG. 1 and FIG. 2) constituting the base end portion 8b, and wide at the opening side (top of FIG. 1 and FIG. 2) of the base end portion 8b in which the through-holes 13a and 13 are formed.

Therefore, in the present embodiment, with both clamping plates 30a and 30b in the unrestrained condition, the clamping surfaces 10b are inclined so that the space between the clamping surfaces 10b is narrow at the connecting portion 17 side, and wide at the opening side of the base end portion 8b. That is to say, by inclining both clamping plates 30a and 30b so that the space between the two becomes wider towards the opening side of the base end portion 8b, the respective clamping surfaces 10b are inclined as mentioned above. On the other hand, the outside flat surfaces 14 are formed so that the outside flat surfaces 14 become mutually parallel. As a result, prior to tightening the clamping bolt 18, the aforementioned wedge-shaped clearances 16a exist between the respective clamping surfaces 10b and the respective outside flat surfaces 14 in the unrestrained condition of the clamping plates 30a and 30b.

Moreover, in the present embodiment, the respective through-holes 13a and 13 formed in the opening side of the clamping plates 30a and 30b for insertion of the clamping bolt 18, are formed so that the central axes of these through-holes 13a and 13 are parallel to a virtual line perpendicular to the outside flat surfaces 14 of the shaft 7. Consequently, the central axes of these through-holes 13a and 13 are inclined with respect to a virtual line perpendicular to the clamping surfaces 10b. That is to say, the clamping plates 30a and 30b are inclined with respect to the outside flat surfaces 14 of the shaft 7 in the unrestrained condition as described above. Therefore, in the case where the through-holes 13a and 13 are formed so that their central axes are parallel to a virtual line perpendicular to the clamping surfaces 10b, the central axes of the through-holes 13a and 13 are not aligned in the unrestrained condition of both clamping plates 30a and 30b. When the central axes are not aligned in this manner, the clamping bolt 18 is not easily inserted into the through-holes 13a and 13. On the other hand, in the present embodiment, by forming the respective through-holes 13a and 13 parallel to a virtual line perpendicular to the respective outside flat surfaces 14, the central axes of these through-holes 13a and 13 are aligned.

The central axes of these through-holes 13a and 13 need not necessarily be aligned (concentric). That is to say, when the clamping bolt 18 is inserted through the through-holes 13a and 13, and screwed and tightened into the nut 11, the outer peripheral surface of the clamping bolt 18 need only be in contact with the inner peripheral surfaces of the through-holes 13a and 13 at the periphery of the opening side of both clamping plates 30a and 30b. Therefore, as shown in FIG. 2, if the diameter of the part of the clamping bolt 18 fitted in the through-hole 13a is D₁, and the diameter of the part of the clamping bolt 18 fitted in the through-hole 13 is D₂, when the difference in size between these parts {(D₁- D₂)/2}, and the difference in height Q (FIG. 1) between these through-holes 13a and 13 at the opening side edge portion in the vertical direction in FIG. 1 and FIG. 2 is approximately the same, the central axes of these through-holes 13a and 13 need not be aligned. However, it is desirable that the central axes of the through-holes 13a and 13 are mutually parallel. As a result, with the clamping bolt 18 inserted, the outer peripheral surface of the clamping bolt 18 contacts with the opening side peripheral surfaces of the through-holes 13a and 13, and the shaft 7 can be held against the connecting portion 17 side by the clamping bolt 18, and play of the shaft 7 in the vertical direction in FIG. 1 and FIG. 2 can be prevented.

Furthermore, in the present embodiment, a chamfer 20 for guiding the clamping bolt 18, and formed on the side of the through-hole 13a from which the clamping bolt 18 is inserted (left side in FIG. 1 and FIG. 2) is also inclined with respect to the virtual line perpendicular to the clamping surfaces 10b with the through-holes 13a and 13 being inclined with respect to the above virtual line. Therefore, as shown in the figure, this chamfer 20 is wide at the opening side of the base end portion 8, and narrow at the connecting portion 17 side of the base end portion 8. Moreover, in the present embodiment, by forming a depression in the inner surface of the respective continuous portions between both ends of the connecting portion 17 in the width direction (left-right in FIG. 1 and FIG. 2) and both clamping plates 30a and 30b, undercuts 19 are provided. As a result, as described below, interference between the inner surfaces of the continuous portions and the outer peripheral surface of the shaft 7, when the shaft 7 is coupled to the base end portion 8b of the yoke 3b is prevented.

Furthermore, in the present embodiment, if the minimum value for the width of the clearances 16a is S (mm), the angle formed between the outside flat surfaces 14 and the clamping surfaces 10b is θ (°), and the plate thickness of the clamping plates 30a and 30b is t (mm), the angle θ and the minimum value S are regulated to ensure that the plate thickness t is 6.5 mm and θ/S is a value greater than 12 (θ/S > 12). It is desirable that this minimum value S is 0.25 mm or less. That is to say, as the minimum value S for the clearances 16a decreases, the strength of the coupling between the shaft 7 and the yoke 3b can be increased, however when the dimensions of the clearances 16a become negative, assembly work becomes difficult. Therefore, when manufacturing errors between the outside flat surfaces 14 and the clamping surfaces 10b are considered, it is desirable that the minimum value S is 0.25 mm or less (more desirably 0.15 mm). In the case where the minimum value S is made less than 0.15 mm, and dimensional accuracy is ensured so that the dimensions of the clearances 16a do not become negative irrespective of manufacturing errors, manufacturing costs undesirably increase.

Moreover, in the case where the minimum value S is made 0.25 mm, the angle θ is greater than 3°. On the other hand, when the minimum value S is 0.15 mm, the angle θ is greater than 1.8°. In order to improve the ease of machining to form the through-holes 13a and 13 at the opening side of the clamping plates 30a and 30b, and to ensure the function of the universal joint, an angle θ of 4° or less is desirable. In other words, the through-holes 13a and 13 are formed by machining, in a condition inclined with respect to a virtual line perpendicular to the clamping surfaces 10b. Thus, when the angle of inclination of the clamping surfaces 10b is large, machining becomes difficult, resulting in increased manufacturing costs. Furthermore, when the clamping bolt 18 is inserted in the through-holes 13a and 13 and tightened by screwing into the nut 11, the clamping plates 30a and 30b deform towards each other, and the arm portion 32 (see FIG. 7) joined to the cross shaft 4 of the yoke 3b also deforms. Thus, when the angle of inclination of the clamping surfaces 10b is large, the cross shaft 4 and the rollers provided within the bearing cups 5 are in strong contact, and the smooth operation of this part may deteriorate. Therefore, it is desirable that the angle of inclination θ of the clamping surfaces 10b is 4° or less.

Also in the embodiment configured as described above, as with the aforementioned conventional structure, the tip end portion of the shaft 7 is inserted between the clamping plates 30a and 30b constituting the base end portion 8b of the yoke 3b. In this condition, as shown in FIG. 1, the aforementioned wedge-shaped clearances 16a exist between the outside flat surfaces 14 formed on the tip end portion of the shaft 7, and the clamping surfaces 10b formed on the clamping plates 30a and 30b. Then the clamping bolt 18 is inserted in the through-holes 13a and 13 formed in the respective clamping plates 30a and 30b, and tightened by screwing the male threaded portion provided on the tip end portion of the clamping bolt 18 into the nut 11. In the present embodiment, a cam bolt is used as the clamping bolt 18. Moreover, a swaged nut having a large resistance to rotation of the threaded part is used as the nut 11 into which the clamping bolt 18 is screwed. As with the structure shown in FIG. 10, one of the through-holes 13a and 13 may be a threaded hole having a structure wherein the tip end portion of the clamping bolt 18 is screwed and tightened in this threaded hole. However, in this case, a cam bolt cannot be used as the clamping bolt 18.

In any case, by screwing and tightening the clamping bolt 18 and the nut 11 together, the both clamping plates 30a and 30b are displaced towards each other. In the present embodiment, since the dimensions of the clearances 16a between the outside flat surfaces 14 and the clamping surfaces 10b are regulated as described above, by screwing and tightening the clamping bolt 18 and the nut 11 together, the surfaces 14 and 10b are brought into contact at the opening side of the base end portion 8b and at the connecting portion 17 side respectively. In other words, as shown in FIG. 2, the surfaces 14 and 10b are in almost complete contact.

That is to say, if the thickness t of the clamping plates 30a and 30b is 6.5 mm, and the relationship between θ and S of the clearances 16a is θ/S > 12, when the clamping bolt 18 and the nut 11 are screwed and tightened together, of the opposing parts of the surfaces 14 and 10b, the part A at the connecting portion 17 side of the base end portion 8b comes into contact first in relation to the central axis G of the shaft 7. Then when the tightening torque of the nut 11 is further increased, the contact area of the surfaces 14 and 10b increases, and the mutually opposed parts of the surfaces 14 and 10b are in almost complete contact. Furthermore, when the tightening torque of the nut 11 is increased to the prescribed magnitude, of the opposing parts of the surfaces 14 and 10b, the contact surface pressure between the surfaces 14 and 10b reaches a maximum at part B on the opening side of the base end portion 8b. In this case, the contact between the surfaces 14 and 10b at part A is maintained. As a result, even when a large twisting torque is applied to the shaft 7, occurrence of play in the joint section between the shaft 7 and the yoke 3b can be prevented.

Since contact at part A and part B of the surfaces 14 and 10b is maintained even when the relationship between θ and S for the clearances 16a is θ/S ≈ 12, play in the joint section between the shaft 7 and the yoke 3b can be prevented to a greater extent than with the structure shown in FIGS. 7 through 11. That is to say, when θ/S ≈ 12, and the clamping bolt 18 and the nut 11 are screwed and tightened together, of the opposing parts of the surfaces 14 and 10b, the part A and part B come into contact almost simultaneously. When the tightening torque of the nut 11 is increased to the prescribed magnitude, the contact surface pressure between the surfaces 14 and 10b reaches a maximum at part B. In this case, as well, contact is maintained at the part A of these surfaces 14 and 10b. However, when θ/S ≈ 12, and the clamping bolt 18 and the nut 11 are screwed and tightened together, since the surfaces 14 and 10b are simultaneously in contact at part A and part B, by subsequently increasing the tightening torque of the nut 11, the contact surface pressure on the part A side does not so much increase as the increase of the tightening torque of the nut 11. Thus, in comparison with θ/S > 12 mentioned above, rigidity in relation to the twisting torque applied to the shaft 7 is reduced. Therefore, as in the present embodiment, it is desirable that θ/S > 12. Here, θ/S ≈ 12 and θ/S > 12 satisfy θ/S ≥ - 8.5t + 67.2 described below.

The reason why play in the joint section between the shaft 7 and the yoke 3b can be prevented by making θ/S > 12, is described below. Of the mutually opposed parts of the outside flat surfaces 14 and the clamping surfaces 10b, referred to in relation to the central axis G of the shaft 7 as part A towards the connecting portion 17 side and part B towards the opening side, the present inventor found the conditions under which the surfaces 14 and 10b are both in contact at these parts A and B, by experiment and by analysis with the finite element method. As a result, it was found that, with a plate thickness t of 6.5 mm, and θ/S ≈ 12, the surfaces 14 and 10b are simultaneously in contact at the parts A and B, when the clamping bolt 18 is tightened.

The yoke 3b employed in the aforementioned experiment and analysis was manufactured of JIS-standard hot rolled mild steel plate, being hot rolled mild steel plate for automobile structural uses (JIS G 3113) formed by pressing, with through-holes 13a and 13 machined at the prescribed locations on the opening sides of the clamping plates 30a and 30b respectively. Moreover, the plate thickness t was approximately 6.5 mm over the entirety of the yoke 3b (except at the undercuts 19). Thus, the plate thickness t of the clamping plates 30a and 30b was also 6.5 mm. Variation in this plate thickness was approximately ±0.2 mm. Furthermore, the length L from the center of the cross shaft 4 connecting the yoke 3b and the yoke 2 to the end surface of the base end portion 8b of the yoke 3b (see FIG. 7) was made 6.5 mm. Moreover, the width W of the outside flat surfaces 14 of the shaft 7 was 13 mm. Furthermore, an M10 bolt was employed as the clamping bolt 18. Moreover, the maximum tightening torque of the nut 11 on the clamping bolt 18 was 50 Nm.

In the experiments and analysis conducted under the aforementioned conditions, it was found that, with a plate thickness t of 6.5 mm for the clamping plates 30a and 30b, and at θ/S ≈ 12, the surfaces 14 and 10b are simultaneously in contact at the parts A and B at which the outside flat surfaces 14 and the clamping surfaces 10b are mutually opposed. It was then found, that when the θ/S value was increased beyond 12, the surfaces 14 and 10b were first in contact at part A, and by increasing the tightening torque of the nut 11, the contact surface pressure at the part A could be increased. Therefore, θ/S > 12 was selected for the present embodiment. Even when θ/S ≈ 12 is selected, the strength of the coupling between the shaft 7 and the yoke 3b can be increased in comparison to the conventional structure, as described above.

Furthermore, the present inventor found the relationship between θ and S at which the surfaces 14 and 10b are simultaneously in contact at the parts A and B, as with the aforementioned case, also for the case in which the plate thickness t of both clamping plates 30a and 30b was changed. As a result, the present inventor found that the surfaces 14 and 10b were simultaneously in contact at the parts A and B with θ/S ≈ 16.2 at a plate thickness t of 6.0 mm, and with θ/S ≈ 7.7 at a plate thickness t of 7.0 mm. The present inventor then found that with θ/S > 16.2 at a plate thickness t of 6.0 mm, and with θ/S > 7.7 at a plate thickness t of 7.0 mm, the strength of the coupling between the shaft 7 and the yoke 3b can be increased.

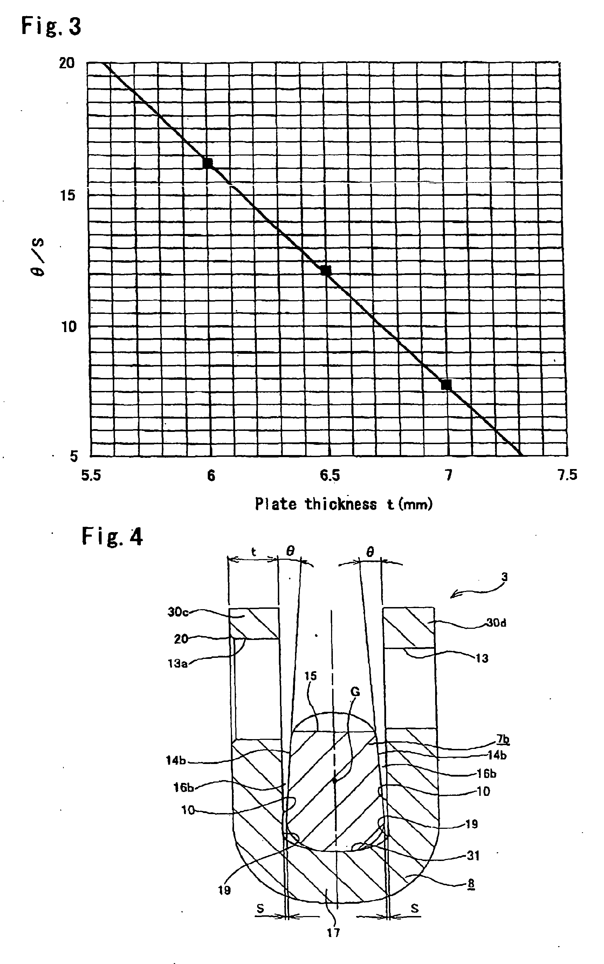

These values are plotted in FIG. 3. In FIG. 3, the points θ/S =16.2 at t = 6.0 mm, θ/S = 12 at t = 6.5 mm, and θ/S = 7.7 at t = 7.0 mm are plotted in an orthogonal coordinate system in which the horizontal axis represents t, and the vertical axis represents θ/S. The approximation expression passing through these points was then obtained using the least-squares method, giving the expression θ/S = - 8.5t + 67.2. Therefore, it is apparent that, if the relationship between θ/S and t satisfies θ/S ≥ - 8.5t + 67.2, the outside flat surfaces 14 and the clamping surfaces 10b are brought into contact at the opening side and the connecting portion 17 side of the base end portion 8b. In particular, if θ/S > - 8.5t + 67.2 is satisfied, the strength of the coupling between the shaft 7 and the yoke 3b can be increased. A proviso is that the plate thickness t of the clamping plates 30a and 30b are within the range of normal use of between 5.5 mm and 7.5 mm (desirably between 6.0 mm and 7.0 mm).

The structure of the present embodiment configured and operated as described above is suited to a column-type electrically-powered steering apparatus. This is to say, with a column-type electrically-powered steering apparatus, since a large twisting torque is readily applied to the shaft, if the strength of the coupling between the shaft and the yoke is high as in the structure of the present embodiment, play does not readily occur, eliminating the unnatural feeling for the driver (ensuring a feeling of rigidity) when steering. The structure of the present invention may be freely incorporated in sliders with spline fit and the like employed in structures for extending and contracting shafts, and in shock absorbers such as rubber couplings and the like for suppressing transmission of vibration to steering wheels. Moreover, in the present embodiment, a structure combining a cam bolt and swaged nut was adopted as a means for tightening together the clamping plates. However, the structure described in Patent Documents 2 through 4 may also be employed.

### [Second Embodiment]

FIG. 4 shows a second embodiment of the present invention. In the present embodiment, clamping surfaces 10 formed on clamping plates 30c and 30d of a yoke 3 are mutually parallel, and outside flat surfaces 14b formed on the tip end portion of a shaft 7b are non-parallel. That is to say, the outside flat surfaces 14b are inclined in the direction in which the width of the tip end portion of the shaft 7b is reduced towards the opening side (top of FIG. 4) of a base end portion 8 of the yoke 3. Therefore with the clamping plates 30c and 30d in the unrestrained condition, wedged-shaped clearances 16b exist between the clamping surfaces 10 and the outside flat surfaces 14b. The relationship between the minimum value S (mm) for the width of the clearances 16b with respect to the plate thickness t (mm) of the clamping plates 30c and 30d, and the angle θ (°) formed between the clamping surfaces 10 and the outside flat surfaces 14b, is the same as for the first embodiment.

In the case of the structure of the present embodiment as described above, since control of the dimensions of the outside flat surfaces 14b formed at the tip end portion of the shaft 7b presents difficulties, manufacturing costs are increased. On the other hand, with the structure of the first embodiment, since the angle to which the clamping plates 30a and 30b are bent to incline the clamping surfaces 10b need only be adjusted, control of the dimensions is comparatively simple. Furthermore, in the structure of the present embodiment, since the shape of the tip end portion of the shaft 7b is asymmetrical in the top-bottom direction in FIG. 4, when the cutout 15 is machined in the tip end portion of the shaft 7b, the shaft 7b is not readily placed in the machining equipment. Manufacturing cost is also increased for this reason. However, since the both clamping surfaces 10 press (envelope) the tip end portion of the shaft 7b towards the connecting portion 17 side, coupling strength (rigidity) can be increased. Other construction and operation are the same as for the first embodiment.

### [Third Embodiment]

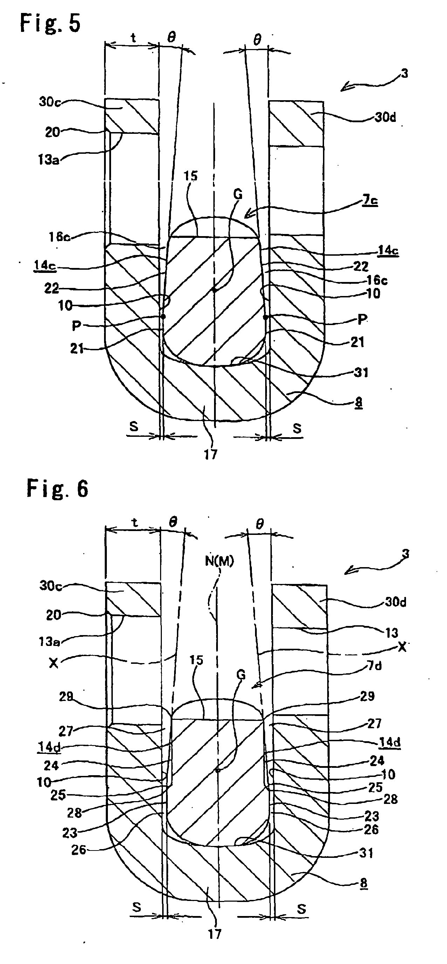

FIG. 5 shows a third embodiment of the present invention. In the present embodiment, clamping surfaces 10 formed on clamping plates 30c and 30d of a yoke 3 are mutually parallel, and part of outside flat surfaces 14c formed on the tip end portion of a shaft 7c are non-parallel. That is to say, in the present embodiment, the parts further towards the connecting portion 17 (constituting the base end portion 8 of the yoke 3), of the portions of outside flat surfaces 14c being towards the connecting portion 17 than a central axis G of the shaft 7c, are formed as parallel parts 21, and the remaining parts are formed as inclined parts 22. The intersection points P of these inclined parts 22 and the parallel parts 21 are on the connecting portion 17 side relative to the central axis G. Moreover, the direction of inclination of these inclined parts 22 is the direction in which the width of the tip end portion of the shaft 7c decreases towards the opening side (top of FIG. 5) of the base end portion 8. Furthermore, in the present embodiment also, the relationship between the angle θ (°) formed between these inclined parts 22 angle θ (°) formed between these inclined parts 22 and the clamping surfaces 10, and the minimum value S (mm) for the width of clearances 16c between the outside flat surfaces 14c and the clamping surfaces 10, with respect to the plate thickness t of the clamping plates 30c and 30d, is the same as for the first embodiment. In the present embodiment, the part between the parallel parts 21 and the clamping surfaces 10 becomes the minimum value S for the width of the clearances 16c.

In the present embodiment, when the clamping bolt 18 is screwed and tightened into the nut 11 (see FIG. 2), the clamping surfaces 10 and the intersection points P, and the inclined parts 22 commence contact simultaneously, or the clamping surfaces 10 commence contact with the intersection points P prior to the inclined parts 22. By then further tightening the nut 11 to the prescribed tightening torque, the clamping surfaces 10 and intersection points P, and the inclined parts 22, are brought into reliable contact. On the other hand, the parallel parts 21 and the clamping surfaces 10 are not in contact, and clearances exist at this part. Thus, in the present embodiment, in contrast to the first embodiment and the second embodiment, undercuts are not formed in the inner surface of the continuous portions between the clamping plates 30c and 30d and connecting portion 17.

With the structure of the present embodiment as described above, the outside flat surfaces 14c and the clamping surfaces 10 do not come into contact at the parallel parts 21, however, surface pressure at the contact parts increases. Moreover, these clamping surfaces 10 press the outside flat surfaces 14c towards the connecting portion 17. Thus, as with the second embodiment, the coupling strength of the shaft 7c and the yoke 3 can be ensured. In particular, since the intersection points P are on the connecting portion 17 side relative to the central axis G of the shaft 7c, the contact area is greater than in the aforementioned conventional structure shown in FIGS. 7 through 11, and coupling strength can be ensured. Other construction and operation are the same as for the first embodiment.

### [Fourth Embodiment]

FIG. 6 shows a fourth embodiment of the present invention. In the present embodiment, outside flat surfaces 14d formed at the tip end portion of a shaft 7d are comprised of first and second flat surfaces 23 and 24. Of these, the first flat surfaces 23 are on a connecting portion 17 (constituting the base end portion 8 of the yoke 3) side (bottom of FIG. 6) relative to a central axis G of the shaft 7d. The second flat surfaces 24 are on the opening side (top of FIG. 6) of the base end portion 8 from the first flat surfaces 23. Steps 25 are provided between the first flat surfaces 23 and the second flat surfaces 24.

Moreover, the part between clamping plates 30c and 30d, which grips the tip end portion of the shaft 7d is formed as a gripping part 31. Furthermore, a virtual centerline N dividing in two in the width direction (left-right direction in FIG. 6) the gripping part 31, and a virtual centerline M dividing in two in the width direction the part at the tip end portion of the shaft 7d, which is inserted in the gripping part 31, are prescribed. These centerlines N and M are aligned as shown in FIG. 6 prior to tightening a clamping bolt 18, and when the outer surfaces of the shaft 7d and the inner surfaces of the gripping part 31 are brought into contact, first and second clearances 26 and 27 exist between the outside flat surfaces 14d and clamping surfaces 10 formed on the both clamping plates 30c and 30d. Of these, the first clearances 26 exist between the first flat surfaces 23 and the clamping surfaces 10. Moreover, the second clearances 27 exist between the second flat surfaces 24 and the clamping surfaces 10. Therefore, the size of the second clearances 27 is greater than that of the first clearances 26. That is to say, the spaces between the second flat surfaces 24 and the clamping surfaces 10 are larger than the spaces between the first flat surfaces 23 and the clamping surfaces 10. The first and second flat surfaces 23 and 24 are parallel with the clamping surfaces 10.

In the present embodiment, in contrast to the aforementioned embodiments, since the outside flat surfaces 14d and the clamping surfaces 10 are formed mutually parallel, the first and second clearances 26 and 27 between the flat surfaces 14d and 10 are not wedge-shaped. Therefore, in the present embodiment, the angle formed between a virtual surface X connecting the continuous portions 28 connecting the steps 25 and the first flat surfaces 23, and the edge portions 29 on the opening side of the second flat surfaces 24, and the clamping surfaces 10, is prescribed as θ. This angle θ (°), and the minimum value S (mm) for the width of the clearances between the outside flat surfaces 14d and the clamping surfaces 10 (the width of the respective first clearances 26 in the present embodiment), are regulated with respect to the plate thickness t (mm) of the clamping plates 30c and 30d, as in the first embodiment. Therefore, the first and second flat surfaces 23 and 24 and the steps 25 are formed so that the angle θ satisfies the conditions described in the first embodiment.

In the present embodiment configured as described above, when the clamping bolt 18 and the nut 11 are screwed and tightened together (see FIG. 2), only the continuous portions 28 and the edge parts 29 of the outside flat surfaces 14d come into contact with the clamping surfaces 10. However, the contact parts between the continuous portions 28 and the clamping surfaces 10 are on the connecting portion 17 side of the base end portion 8, and the contact parts between the edge parts 29 and the clamping surfaces 10 are on the opening side of the base end portion. Therefore the clamping surfaces 10 and the outside flat surfaces 14d are brought into contact with a large surface pressure at positions separated in the top-bottom direction in FIG. 6. Moreover, the clamping surfaces 10 press the shaft 7d against (so as to envelope) the connecting portion 17. Thus, rigidity in relation to the twisting torque applied to the shaft 7d can be ensured. Other construction and operation are the same as for the third embodiment.

## Claims

1. A joint section between a shaft and a universal joint yoke, comprising:
a shaft that rotates in use;
a pair of outside flat surfaces (14) formed on an outer peripheral surface of a tip end portion of the shaft (7);
a metal yoke (3b) constituting a universal joint, and having a base end portion (8b) with an approximate U-shape in cross section and an opening on one side thereof;
a pair of clamping plates (30a, 30b) constituting the base end portion that are arranged separated from each other and have respectively inner surfaces serving as clamping surfaces (10b) opposed to the outside flat surfaces (14);
a connecting portion for connecting together the clamping plates at a part on opposite side of the opening of the base end portion (8b);
a through-hole (13, 13a) or threaded hole formed in the clamping plates; and
a clamping bolt (18) with a male thread portion formed at a tip end portion which when inserted through the through-hole (13, 13a) is screwed into the threaded hole or a nut;
wherein in the case where it is assumed that prior to tightening the clamping bolt, a virtual centerline dividing in two in the width direction a gripping portion between the clamping plates, and a virtual centerline dividing in two in the width direction a part of the tip end portion of the shaft inserted in the gripping portion are aligned, and an outer surface of the tip end portion of the shaft and an inner surface of the connecting portion are brought into contact, clearances exist between the outside flat surfaces and the clamping surfaces, which are narrow at the connecting portion side, and wide at the opening side of the base end portion in which the through-hole or threaded hole are formed; and
when the minimum value for the width of both clearances is S(mm), the angle formed between the outside flat surfaces and the clamping surfaces at a part at which these surfaces are non-parallel is θ (° ), and the plate thickness of the both clamping plates is t(mm), θ/S ≥ -8.5 t + 67.2 is satisfied when the plate thickness t is within a range of between 5.5 mm and 7.5 mm.

2. A joint section between a shaft and a universal joint yoke, comprising:
a shaft that rotates in use;
a pair of outside flat surfaces formed on an outer peripheral surface of a tip end portion of the shaft;
a metal yoke constituting a universal joint, and having a base end portion with an approximate U-shape in cross section and an opening on one side thereof;
a pair of clamping plates constituting the base end portion that are arranged separated from each other and have respectively inner surfaces serving as clamping surfaces opposed to the outside flat surfaces;
a connecting portion for connecting together the clamping plates at a part on opposite side of the opening of the base end portion;
a through-hole or threaded hole formed in the clamping plates; and
a clamping bolt with a male thread portion formed at a tip end portion which when inserted through the through-hole is screwed into the threaded hole or a nut;
wherein in the case where it is assumed that prior to tightening the clamping bolt, a virtual centerline dividing in two in the width direction a gripping portion between the clamping plates, and a virtual centerline dividing in two in the width direction a part of the tip end portion of the shaft inserted in the gripping portion are aligned, and an outer surface of the tip end portion of the shaft and an inner surface of the connecting portion are brought into contact, clearances exist between the outside flat surfaces and the clamping surfaces,
the respective outside flat surfaces have a first flat surface existing towards the connecting portion side from the shaft center, a second flat surface existing towards the opening side of the base end portion in which the through-hole or threaded hole is formed, from the first flat surface, and a step provided between the first flat surface and the second flat surface, so that the spaces between the second flat surfaces and the clamping surfaces are larger than the spaces between first flat surfaces and the clamping surfaces; and
when the minimum value for the width of both clearances between the outside flat surfaces and the clamping surfaces is S(mm), the angle formed between the virtual surfaces connecting continuous portions of the step portions and the first flat surfaces, and the edge on the opening side of the second surfaces, and the clamping surfaces, is θ (°), and the plate thickness of the both clamping plates is t(mm), θ/S ≥ - 8.5 t + 67.2 is satisfied when the plate thickness t is within a range of between 5.5 mm and 7.5 mm.

3. The joint section between a shaft and a universal joint yoke according to either one of claims 1 and 2, wherein θ/S > 16.2 when the thickness t of both clamping plates is 6 mm.

4. The joint section between a shaft and a universal joint yoke according to either one of claims 1 and 2, wherein θ/S > 12 when the thickness t of both clamping plates is 6.5 mm.

5. The joint section between a shaft and a universal joint yoke according to either one of claims 1 and 2, wherein θ/S > 7.7 when the thickness t of both clamping plates is 7 mm.

## Patentansprüche

1. Verbindungsabschnitt zwischen einer Welle und einer Gelenkkupplungsgabel, umfassend:
eine Welle, die im Betrieb rotiert;
ein Paar von äußeren flachen Oberflächen (14), die auf einer Außenumfangsoberfläche eines Spitzenendabschnitts der Welle (7) ausgebildet sind;
eine Metallgabel (3b), welche eine Gelenkkupplung bildet, und ein Basisendabschnitt (8b) mit einer annähernd U-förmigen Querschnittsform und mit einer Öffnung auf einer Seite davon;
ein Paar von Klemmplatten (30a, 30b), welche den Basisendabschnitt bilden, die separat voneinander angeordnet sind und jeweilige innere Oberflächen aufweisen, die als Klemmoberflächen (10b), gegenüberliegend den äußeren flachen Oberflächen (14), dienen;
einen Verbindungsabschnitt zum Verbinden der Klemmplatten miteinander an einem Teil auf der gegenüberliegenden Seite der Öffnung des Basisendabschnitts (8b);
eine Durchgangsöffnung (13, 13a) oder eine mit Gewinde versehene Öffnung, die in den Klemmplatten ausgebildet ist; und
einen Klemmbolzen (18) mit einem Außengewindeabschnitt, der an dem Spitzenendabschnitt ausgebildet ist, welcher in die mit Gewinde versehene Öffnung oder eine Mutter eingeschraubt ist, wenn dieser durch die Durchgangsöffnung (13, 13a) eingesetzt ist;
wobei in dem Fall, in welchem angenommen wird, dass vor dem Festziehen des Klemmbolzens eine virtuelle Zentrallinie, welche die Breitenrichtung eines Greifabschnitts zwischen den Klemmplatten in zwei teilt, und eine virtuelle Zentrallinie, welche die Breitenrichtung eines Teils des Spitzenendabschnitts der Welle, die in den Greifabschnitt eingesetzt ist, in zwei teilt, ausgerichtet sind, und eine Außenoberfläche des Spitzenendabschnitts der Welle und eine Innenoberfläche des Verbindungsabschnitts in Kontakt gebracht sind, Spalträume zwischen den äußeren flachen Oberflächen und den Klemmoberflächen vorliegen, welche eng an der Verbindungsabschnittsseite sind, und groß an der Öffnungsseite des Basisendabschnitts, in welchem die Durchgangsöffnung oder die mit Gewinde versehene Öffnung ausgebildet sind; und
wenn ein Minimalwert für die Breite von beiden Spalträumen S(mm) ist, der zwischen den äußeren flachen Oberflächen und den Klemmoberflächen gebildete Winkel an einem Teil, an welchem diese Oberflächen nicht-parallel sind, θ(°) ist, und die Plattendicke von den beiden Klemmplatten t(mm) ist, θ/S ≥ -8,5 t + 67,2 erfüllt wird, wenn die Plattendicke t innerhalb eines Bereichs von zwischen 5,5 mm und 7,5 mm ist.

2. Verbindungsabschnitt zwischen einer Welle und einer Gelenkkupplungsgabel, umfassend:
eine Welle, die im Betrieb rotiert;
ein Paar von äußeren flachen Oberflächen, die auf einer Außenumfangsoberfläche eines Spitzenendabschnitts der Welle ausgebildet sind;
eine Metallgabel, welche eine Gelenkkupplung bildet, und ein Basisendabschnitt mit einer annähernd U-förmigen Querschnittsform und mit einer Öffnung auf einer Seite davon;
ein Paar von Klemmplatten, welche den Basisendabschnitt bilden, die separat voneinander angeordnet sind und jeweilige innere Oberflächen aufweisen, die als Klemmoberflächen gegenüberliegend den äußeren flachen Oberflächen dienen;
einen Verbindungsabschnitt zum Verbinden der Klemmplatten miteinander an einem Teil auf der gegenüberliegenden Seite der Öffnung des Basisendabschnitts;
eine Durchgangsöffnung oder eine mit Gewinde versehene Öffnung, die in den Klemmplatten ausgebildet ist; und
einen Klemmbolzen mit einem Außengewindeabschnitt, der an dem Spitzenendabschnitt ausgebildet ist, welcher in die mit Gewinde versehene Öffnung oder eine Mutter eingeschraubt ist, wenn dieser durch die Durchgangsöffnung eingesetzt ist;
wobei in dem Fall, in welchem angenommen wird, dass vor dem Festziehen des Klemmbolzens eine virtuelle Zentrallinie, welche die Breitenrichtung eines Greifabschnitts zwischen den Klemmplatten in zwei teilt, und eine virtuelle Zentrallinie, welche die Breitenrichtung eines Teils des Spitzenendabschnitts der Welle, die in den Greifabschnitt eingesetzt ist, in zwei teilt, ausgerichtet sind, und eine Außenoberfläche des Spitzenendabschnitts der Welle und eine Innenoberfläche des Verbindungsabschnitts in Kontakt gebracht sind, Spalträume zwischen den äußeren flachen Oberflächen und den Klemmoberflächen vorliegen,
wobei die jeweiligen äußeren flachen Oberflächen eine erste flache Oberfläche, die zu der Verbindungsabschnittsseite von dem Wellenzentrum vorliegt, eine zweite flache Oberfläche, die zu der Öffnungsseite des Basisendabschnitts vorliegt, in welchem die Durchgangsöffnung oder die mit Gewinde versehene Öffnung ausgebildet ist, von der ersten flachen Oberfläche, und eine Stufe aufweisen, die zwischen der ersten flachen Oberfläche und der zweiten flachen Oberfläche vorgesehen ist, so dass die Räume zwischen den zweiten flachen Oberflächen und den Klemmoberflächen größer als die Räume zwischen den ersten flachen Oberflächen und den Klemmoberflächen sind; und
wobei dann, wenn der Minimalwert für die Breite von beiden Freiräumen zwischen den äußeren flachen Oberflächen und den Klemmoberflächen S(mm) ist, der Winkel, der zwischen den virtuellen Oberflächen, die kontinuierliche Abschnitte der Stufenabschnitte und der ersten flachen Oberflächen verbinden, und der Kante der Öffnungsseite der zweiten Oberflächen, und der Klemmoberflächen θ(°) ist, und die Plattendicke von den beiden Klemmplatten t(mm) ist, θ/S ≥ -8,5 t + 67,2 erfüllt wird, wenn die Plattendicke t innerhalb eines Bereichs zwischen 5,5 mm und 7,5 mm ist.

3. Verbindungsabschnitt zwischen einer Welle und einer Gelenkkupplungsgabel gemäß irgendeinem der Ansprüche 1 und 2, wobei θ/S > 16,2 ist, wenn die Dicke t von beiden Klemmplatten 6 mm ist.

4. Verbindungsabschnitt zwischen einer Welle und einer Gelenkwellengabel gemäß einem der Ansprüche 1 und 2, wobei θ/S > 12 ist, wenn die Dicke t von beiden Klemmplatten 6,5 mm ist.

5. Verbindungsabschnitt zwischen einer Welle und einer Gelenkwellengabel gemäß einem der Ansprüche 1 und 2, wobei θ/S > 7,7 ist, wenn die Dicke t von beiden Klemmplatten 7 mm ist.

## Revendications

1. Section de liaison entre un arbre et une fourchette d'un joint universel, comprenant :
un arbre qui tourne en usage ;
une paire de surfaces (14) planes extérieures formées sur une surface périphérique extérieure d'une partie d'extrémité de l'arbre (7) ;
une fourchette (36) métallique constituant un joint universel, et ayant une partie d'extrémité de base (8b) avec une section transversale approximativement en forme de U et une ouverture sur un côté de celle-ci ;
une paire de plaques de serrage (30a, 30b) constituant la partie d'extrémité de base qui sont disposées séparées l'une de l'autre et ayant respectivement des surfaces intérieures servant de surfaces de serrage (10b) opposées aux surfaces planes (14) extérieures ;
une partie de raccordement pour raccorder ensemble les plaques de serrage sur une partie sur le côté opposé de l'ouverture de la partie d'extrémité de base (8b) ;
un trou débouchant (13, 13a) ou un trou taraudé formé dans les plaques de serrage ; et
un boulon de serrage (18) avec une partie de filetage mâle formée sur une partie d'extrémité inclinée qui, lorsqu'elle est insérée dans le trou débouchant (13, 13a), est vissée dans le trou taraudé ou une rainure ;
dans laquelle au cas où il est supposé qu'avant le serrage du boulon de serrage, une ligne médiane virtuelle divisant en deux dans le sens de la largeur une partie de préhension entre les plaques de serrage, et une ligne médiane virtuelle divisant en deux dans le sens de la largeur une partie de la partie d'extrémité de l'arbre inséré dans la partie de préhension sont alignées, et une surface extérieure de la partie d'extrémité de l'arbre et une surface intérieure de la partie d'assemblage sont mises en contact, des espacements existent entre les surfaces planes extérieures et les surfaces de serrage, qui sont étroits sur le côté de partie d'assemblage et larges sur le côté d'ouverture de la partie d'extrémité de base dans laquelle le trou débouchant ou le trou taraudé est formé ; et
lorsque la valeur minimale pour la largeur des deux espacements est S (mm), l'angle formé entre les surfaces planes extérieures et les surfaces de serrage sur une partie sur laquelle ces surfaces ne sont pas parallèles est θ (°), et l'épaisseur des deux plaques de serrage est t (mm), la relation θ/S ≥-8,5 t + 67,2 est satisfaite lorsque l'épaisseur de plaque t se trouve dans une plage comprise entre 5,5 mm et 7,5 mm.

2. Section de liaison entre un arbre et une fourchette d'un joint universel, comprenant :
un arbre qui tourne en usage ;
une paire de surfaces planes extérieures formées sur une surface périphérique extérieure d'une partie d'extrémité de l'arbre ;
une fourchette métallique constituant un joint universel, et ayant une partie d'extrémité de base avec une section transversale approximativement en forme de U et une ouverture sur un côté de celle-ci ;
une paire de plaques de serrage constituant la partie d'extrémité de base qui sont disposées séparées l'une de l'autre et ayant respectivement des surfaces intérieures servant de surfaces de serrage opposées aux surfaces planes extérieures ;
une partie de raccordement pour raccorder ensemble les plaques de serrage sur une partie sur le côté opposé de l'ouverture de la partie d'extrémité de base ;
un trou débouchant ou un trou taraudé formé dans les plaques de serrage ; et
un boulon de serrage avec une partie de filetage mâle formée sur une partie d'extrémité inclinée qui lorsqu'elle est insérée dans le trou débouchant est vissée dans le trou taraudé ou une rainure ;
dans laquelle au cas où il est supposé qu'avant le serrage du boulon de serrage, une ligne médiane virtuelle divisant en deux dans le sens de la largeur une partie de préhension entre les plaques de serrage, et une ligne médiane virtuelle divisant en deux dans le sens de la largeur une partie de la partie d'extrémité inclinée de l'arbre inséré dans la partie de préhension sont alignées, et une surface extérieure de la partie d'extrémité inclinée de l'arbre et une surface intérieure de la partie d'assemblage sont mises en contact, des espacements existent entre les surfaces planes extérieures et les surfaces de serrage,
les surfaces planes extérieures respectives ont une première surface plane existant vers le côté de partie de raccordement à partir du centre de l'arbre, une seconde surface plane existant vers le côté d'ouverture de la partie d'extrémité de base, dans laquelle le trou débouchant ou le trou taraudé est formé, à partir de la première surface plane, et un étage fourni entre la première surface plane et la seconde surface plane de sorte que les espaces entre les secondes surfaces planes et les surfaces de serrage soient plus larges que les espacements entre les premières surfaces planes et les surfaces de serrage ; et
lorsque la valeur minimale pour la largeur des deux espacements entre les surfaces planes extérieures et les surfaces de serrage est S (mm), l'angle formé entre les surfaces virtuelles raccordant les parties continues des parties d'étage et les premières surfaces planes, et l'arête sur le côté d'ouverture des secondes surfaces, et les surfaces de serrage, est θ (°), et l'épaisseur des deux plaques de serrage est t (mm), la relation θ/S ≥-8,5 t + 67,2 est satisfaite lorsque l'épaisseur de plaque t se trouve dans une plage comprise entre 5,5 mm et 7,5 mm.

3. Section de liaison entre un arbre et une fourchette d'un joint universel selon l'une quelconque des revendications 1 et 2, dans laquelle θ/S > 16,2 lorsque l'épaisseur t des deux plaques de serrage est 6 mm.

4. Section de liaison entre un arbre et une fourchette d'un joint universel selon l'une quelconque des revendications 1 et 2, dans laquelle θ/S > 12 lorsque l'épaisseur t des deux plaques de serrage est 6,5 mm.

5. Section de liaison entre un arbre et une fourchette d'un joint universel selon l'une quelconque des revendications 1 et 2, dans laquelle θ/S > 7,7 lorsque l'épaisseur t des deux plaques de serrage est 7 mm.
